# FASCICULE DE BREVET EUROPEEN

(11) **EP 3 350 973 B1**
(45) Date de publication et mention de la délivrance du brevet: **20.10.2021**
(21) Numéro de dépôt: 16794679.7
(22) Date de dépôt: 14.09.2016
(51) Int. Cl.: H04L 29/06, G06F 21/34, G06F 21/36, H04W 12/12

(54) **PROCÉDÉ D'AUTHENTIFICATION DE SITE DE LA TOILE ET DE SÉCURISATION D'ACCÈS À UN SITE DE LA TOILE**
VERFAHREN ZUR WEBSITE-AUTHENTIFIZIERUNG UND ZUR SICHERUNG DES ZUGANGS ZU EINER WEBSITE
METHOD FOR WEBSITE AUTHENTICATION AND FOR SECURING ACCESS TO A WEBSITE

(30) Priorité: 14.09.2015 FR 1558550
(43) Date de publication de la demande: 25.07.2018
(73) Titulaire: Advanced Track & Trace, 92500 Rueil-Malmaison (FR)
(72) Inventeur: SAGAN, Zbigniew, 92500 Rueil-Malmaison (FR)
(74) Mandataire: Cornuejols, Georges
(86) Numéro de dépôt international: PCT/FR2016/052322
(87) Numéro de publication internationale: WO 2017/046522

(56) Documents cités:
- EP-A1- 2 421 217
- WO-A1-2013/000741
- WO-A2-2011/113874
- FR-A1- 3 018 127
- US-A1- 2012 240 204
- STARNBERGER G ET AL: "QR-TAN: Secure Mobile Transaction Authentication", AVAILABILITY, RELIABILITY AND SECURITY, 2009. ARES '09. INTERNATIONAL CONFERENCE ON, IEEE, PISCATAWAY, NJ, USA, 16 mars 2009 (2009-03-16), pages 578-583, XP031469253, ISBN: 978-1-4244-3572-2
- R. Divya ET AL: "Visual Authentication Using QR Code to Prevent Keylogging", International Journal of Engineering Trends and Technology, 1 février 2015 (2015-02-01), page 3, XP055252468, Extrait de l'Internet: URL:http://www.ijettjournal.org/2015/volum e-20/number-3/IJETT-V20P227.pdf [extrait le 2016-02-23]

## Description

### DOMAINE TECHNIQUE DE L'INVENTION

La présente invention concerne un procédé d'authentification de site de la toile et de sécurisation d'accès à un site de la toile. Elle s'applique, notamment, à éviter les fraudes de type « phishing », tant pour les sites que pour leurs utilisateurs.

### ETAT DE LA TECHNIQUE

Le « phishing » (en français « hameçonnage » ou filoutage) est une technique utilisée par des fraudeurs pour obtenir des renseignements personnels dans le but de perpétrer une usurpation d'identité. La technique consiste à faire croire à la victime qu'elle s'adresse à un tiers de confiance - banque, administration, etc. - afin de lui soutirer des renseignements personnels : mot de passe, numéro de carte de crédit, date de naissance, etc. C'est une forme d'attaque informatique reposant sur l'ingénierie sociale. Elle peut se faire par courrier électronique, par des sites web falsifiés ou autres moyens électroniques. Lorsque cette technique utilise les messages courts (« SMS »), elle s'appelle SMiShing.

Les attaques par hameçonnage sont le plus souvent dirigées vers les sites sensibles tels que les sites bancaires. Les sites de réseaux sociaux sont aujourd'hui également la cible de ces attaques. Les profils des utilisateurs des réseaux sociaux contiennent de nombreux éléments privés qui permettent aux pirates informatiques de s'insérer dans la vie des personnes ciblées et de réussir à récupérer des informations sensibles.

Les criminels informatiques utilisent généralement l'hameçonnage pour voler de l'argent. Les cibles les plus courantes sont les services bancaires en ligne, les fournisseurs d'accès à internet, les sites de ventes aux enchères tels qu'eBay (marque déposée), et le système de paiement Paypal (marque déposée). Les adeptes de l'hameçonnage envoient habituellement des courriels à un grand nombre de victimes potentielles.

Typiquement, les messages ainsi envoyés semblent émaner d'une société digne de confiance et sont formulés de manière à alarmer le destinataire afin qu'il effectue une action en conséquence. Une approche souvent utilisée est d'indiquer à la victime que son compte a été désactivé à cause d'un problème et que la réactivation ne sera possible qu'en cas d'action de sa part. Le message fournit alors un hyperlien qui dirige l'utilisateur vers une page Web qui ressemble à s'y méprendre au vrai site de la société digne de confiance. Arrivé sur cette page falsifiée, l'utilisateur est invité à saisir des informations confidentielles qui sont alors enregistrées par le criminel.

Les parades à ces attaques sont entièrement soumises à l'attention des utilisateurs :
A/ Vérification de l'orthographe du nom de domaine.
   La syntaxe défaillante et le caractère inadéquat de l'adresse Web proposée dans le corps du message sont susceptibles d'éveiller les soupçons.
   La vérification de l'adresse web dans la barre d'adresse du navigateur web est la première parade. Ainsi, une attaque simple consiste à utiliser un nom de domaine très semblable (par exemple avec une faute grammaticale ou orthographique), comme http://www.compagniegeneral.fr au lieu de http://www.compagniegenerale.fr. L'attaquant aura préalablement acheté un nom de domaine proche de l'original, généralement une variante orthographique.
B/ Vérification de l'absence d'arobase dans l'URL (« Uniform resource locator » pour localisateur de ressource uniforme).
   Dans les années 1990 et au début des années 2000, les attaquants concevaient une URL ressemblant à une URL légitime, en écrivant le nom de domaine usurpé comme login. Du fait de cette technique d'hameçonnage, les navigateurs web ont été améliorés afin de prévenir leurs utilisateurs lorsqu'ils détectent cette manœuvre. Cette technique d'hameçonnage est donc aujourd'hui minoritaire.
C/ Vérifier l'absence de caractères Unicode
   Une méthode plus élaborée pour masquer le nom de domaine réel consiste à utiliser des caractères bien choisis parmi les dizaines de milliers de caractères du répertoire Unicode. En effet, certains caractères spéciaux ont l'apparence des caractères de l'alphabet latin mais l'adresse renvoie vers un site web différent.
   Une contre-mesure à cette attaque est de ne pas permettre l'affichage des caractères hors du répertoire ASCII, qui ne contient que les lettres de A à Z, les chiffres et de la ponctuation. Cette dernière contre-mesure est cependant difficilement compatible avec l'internationalisation des noms de domaine, qui requiert le jeu de caractères Unicode.
D/ Vérifier les certificats électroniques
   Il existe depuis les années 1990 une parade technique à l'hameçonnage : le certificat électronique. Toutefois, l'interface utilisateur des navigateurs Web a longtemps rendu les certificats incompréhensibles pour les visiteurs. Cette interface était connue sous les traits d'un petit cadenas. Il était simplement expliqué au grand public que le cadenas signifie que la communication est chiffrée, ce qui est vrai, mais ne protège aucunement contre l'hameçonnage. Dans les années 2000, des certificats étendus ont été inventés. Ils permettent d'afficher plus clairement l'identité vérifiée d'un site.
E/ Écrire manuellement les URL
   Une personne contactée au sujet d'un compte devant être « vérifié » doit chercher à régler le problème directement avec la société concernée ou se rendre sur le site web en tapant manuellement l'adresse dans la barre d'adresse dans son navigateur web plutôt qu'en cliquant sur un lien qui lui aurait été fourni.
F/ Utiliser les filtres anti-spam.
   Les filtres anti-spam aident à protéger l'utilisateur des criminels informatiques par le fait qu'ils réduisent le nombre de courriels que les utilisateurs reçoivent et par conséquent les risques d'hameçonnage.

Comme on le comprend aisément, ces parades sont insuffisantes : Elles requièrent des étapes complexes et fastidieuses maîtrisées par très peu d'internautes.

Or les erreurs grossières des tentatives d'hameçonnage les plus anciennes ont maintenant été corrigées et le risque augmente en conséquence.

Le document FR 3 018 127 enseigne un procédé de sécurisation d'accès à un site de la toile par génération d'un logo représentatif uniquement de valeurs de paramètres de serveur hébergeant ce site. Ce procédé ne permet pas une vérification aisée de la validité du site. On note qu'aucun message n'est saisi sur une page de ce site, une adresse de page de ce site ne pouvant être confondu avec un message, puisqu'elle est invariante et qu'un message comporte nécessairement une partie variable constituant sa signification. De plus, aucun message fourni par l'utilisateur n'est représenté par le logo généré.

Le document US 2012/240204 enseigne un chiffrement de données d'authentification (« credentials ») de l'utilisateur (identifiant/login et/ou mot de passe/password) et d'un serveur de sécurité. Les données chiffrées sont reçues par un terminal utilisateur et transmises à un serveur tiers, qui vérifie ces données d'authentification. Ce procédé complexe ne permet pas une vérification aisée de la validité du site. On note qu'aucun message n'est saisi sur une page du site, un login et/ou un password ne pouvant être confondus avec un message, puisqu'ils sont invariants et qu'un message comporte nécessaire une partie variable constituant sa signification. De plus, l'utilisateur ne peut pas vérifier, par lui-même l'authenticité du site.

On connait également la demande de brevet européen EP 2 421 217 qui divulgue un système de communication configuré pour fournir des données d'accès basées sur une connexion authentifiée au moyen d'un identifiant temporaire de connexion authentifié reçu par un dispositif sans fil

### OBJET DE L'INVENTION

La présente invention vise à remédier à tout ou partie de ces inconvénients. A cet effet, la présente invention vise un procédé de sécurisation d'accès à un site de la toile, qui comporte successivement :
- une étape d'accès audit site par un premier terminal utilisateur,
- une étape de saisie d'un message personnel, imprévisible et variable entre deux accès successifs au site de la toile avec le terminal utilisateur sur une page du site,
- une étape de transmission du message à un serveur du site de la toile,
- une étape de chiffrement du message par le serveur du site de la toile pour former un code visible,
- une étape d'affichage du code visible sur un écran d'affichage du premier terminal utilisateur,
- une étape de prise d'image du code visible avec un deuxième terminal utilisateur, éventuellement identique au premier terminal utilisateur,
- une étape de déchiffrement du code avec le deuxième terminal utilisateur et
- une étape de fourniture à l'utilisateur du message déchiffré, par le deuxième terminal utilisateur.

Grâce à ces dispositions, l'utilisateur reconnaît immédiatement son message, ou non, et authentifie ainsi le site de la toile auquel il accède. Connaissant la clé de déchiffrement, le deuxième terminal utilisateur permet à l'utilisateur de vérifier un message intelligible et donc de vérifier que le site qu'il visite est bien le site associé à un serveur possédant la clé de chiffrement, c'est-à-dire que ce site est le site légitime auquel il souhaite accéder. Le message étant choisi par l'utilisateur, il lui est personnel, imprévisible et, préférentiellement, variable entre deux accès successifs au site, voire unique, pour renforcer la sécurité.

On note ici que le terme d'imprévisible ne signifie pas que le format du message n'est pas connu du serveur du site mais que le contenu du message est librement choisi par l'utilisateur et donc inconnu du serveur du site.

Dans des modes de réalisation, le message représente un geste de l'utilisateur.

Dans des modes de réalisation, le message comporte une succession d'images de l'utilisateur.

Dans des modes de réalisation, le message comporte une partie alphanumérique saisie par l'utilisateur.

Dans des modes de réalisation, le message comporte au moins une donnée biométrique de l'utilisateur.

Dans des modes de réalisation, le message comporte une photographie de l'utilisateur.

Dans des modes de réalisation, le message comporte une phrase prononcée par l'utilisateur.

Dans des modes de réalisation, le message est représentatif d'un mouvement de pointeur effectué par l'utilisateur.

Par exemple, le message représente le clic de validation du « panier » récapitulant des objets et/ou services sélectionnés par l'utilisateur sur le site.

Dans des modes de réalisation, le code prend la forme d'un logo du site.

Dans des modes de réalisation, le procédé objet de la présente invention comporte, de plus, une étape de génération, par le serveur, d'un code personnel, une étape de transmission du code personnel dans le code visible et une étape de saisie, par l'utilisateur, avec le premier terminal utilisateur, sur une page du site, du code personnel affiché par le deuxième terminal utilisateur.

Ce deuxième message permet au serveur du site de vérifier que l'utilisateur du premier terminal utilisateur est l'utilisateur du deuxième terminal utilisateur. Par exemple, le deuxième terminal utilisateur est un téléphone mobile.

Dans des modes de réalisation, le deuxième terminal est différent du premier terminal.

Dans des modes de réalisation, le deuxième terminal est identique au premier terminal, la prise d'image étant contrôlée par un logiciel de déchiffrement.

### BREVE DESCRIPTION DES FIGURES

D'autres avantages, buts et caractéristiques particulières de la présente invention ressortiront de la description qui va suivre faite, dans un but explicatif et nullement limitatif, en regard de dessins annexés, dans lesquels :
- la figure 1 représente, schématiquement, des dispositifs mis en œuvre dans un premier mode de réalisation du procédé objet de l'invention,
- la figure 2 représente, sous forme d'un logigramme, des étapes mises en œuvre dans le premier mode de réalisation particulier du procédé de l'invention,
- la figure 3 représente, schématiquement, des dispositifs mis en œuvre dans un deuxième mode de réalisation du procédé objet de l'invention et
- la figure 4 représente, sous forme d'un logigramme, des étapes mises en œuvre dans le deuxième mode de réalisation particulier du procédé de l'invention.

### DESCRIPTION D'EXEMPLES DE REALISATION DE L'INVENTION

On note, dès à présent, que les figures ne sont pas à l'échelle. Dans toute la description, « un » serveur désigne aussi bien un serveur unique qu'un ensemble de serveurs reliés entre eux et coopérant pour réaliser une fonction.

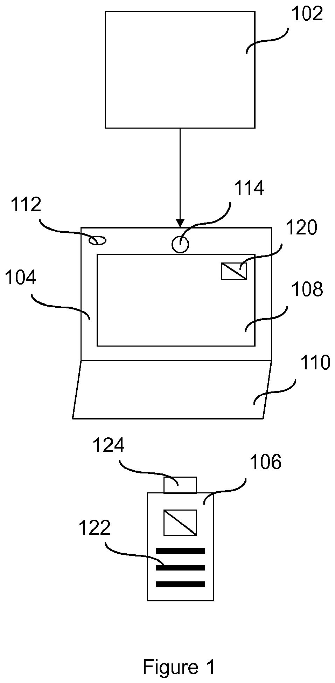

On observe, en figure 1, un serveur de site de la toile 102. Le serveur 102 héberge au moins une page 108 du site et génère un code 120 obtenu par chiffrement d'un message, lors de chaque accès d'un utilisateur à cette page 108. L'utilisateur utilise deux terminaux différents. Le premier, 104, par exemple un ordinateur personnel, une tablette, un ordiphone (en anglais « smartphone ») ou un objet connecté, lui sert à accéder au site de la toile.

Le deuxième terminal utilisateur, 106, sert à authentifier le site. Le deuxième terminal utilisateur 106 comporte un capteur de code 124, par exemple un capteur d'image ou un transducteur acousto-électrique, tel un microphone. Le deuxième terminal utilisateur 106 comporte aussi une interface utilisateur, par exemple un écran d'affichage ou un haut-parleur. Le deuxième terminal utilisateur 106 est, par exemple un appareil photo, un ordinateur, une tablette, un ordiphone ou un objet connecté.

Le deuxième terminal utilisateur 106 capte le code 120, le déchiffre et transmet le message déchiffré 122 à l'utilisateur sur l'interface utilisateur.

En vérifiant le contenu du message, l'utilisateur peut s'assurer que la page de site à laquelle il accède est la page du site légitime et non une page d'un site miroir sur lequel il risque d'être victime d'une fraude.

La clé de chiffrement utilisée peut être symétrique ou, préférentiellement, asymétrique. Pour augmenter la fiabilité de l'authentification du site, le message est préférentiellement différent à chaque accès au site de la toile. Pour augmenter la fiabilité de l'authentification du site, le message est préférentiellement personnalisé, c'est-à-dire différent pour chaque visiteur du site de la toile et reconnaissable par cet utilisateur comme lui étant propre (spécifique).

Préférentiellement, le message chiffré est donc généré à partir de données fournies par l'utilisateur lui-même. Préférentiellement, ces données sont fournies au cours de la session d'accès au site par le premier terminal utilisateur 104.

Par exemple, l'utilisateur est invité, pour constituer le message :
- à saisir un message alphanumérique sur le clavier 110 du premier terminal utilisateur, éventuellement sur un clavier virtuel, éventuellement éphémère et affiché par le site,
- à déplacer un pointeur (son doigt sur un écran tactile ou le pointeur d'une souris) sur la page affichée 108, selon un mouvement de son choix,
- à prononcer une phrase devant le microphone 112 du premier terminal utilisateur 104,
- à faire capter au moins une donnée biométrique (empreinte digitale, reconnaissance faciale ou de la main, ...) par un capteur du premier terminal utilisateur 104,
- à faire capter au moins une image de son visage par un capteur d'image 114 du premier terminal utilisateur 104 et/ou
- à faire capter une succession d'images de lui par le capteur d'image 114 du premier terminal utilisateur, par exemple pour effectuer un geste représentant son accord (ou acquiescement) pour un accès ou une transaction.

Ce message, une fois chiffré par un serveur de sécurité associé au site, est retourné sous la forme du code 120 au premier terminal utilisateur 104 et restitué, après déchiffrement, par le deuxième terminal utilisateur 106.

Préférentiellement, s'il est visuel, le code 120 affiché sur l'écran du premier terminal utilisateur 104 prend la forme d'un logo du site. Ce logo comporte des variations, par exemple stéganographiques (watermark sur sa surface) ou de contour, représentatives du message chiffré.

En variante, le code visible est remplacé par un code sonore diffusé par un haut-parleur du premier terminal utilisateur, sa capture étant réalisée avec un microphone du deuxième terminal utilisateur.

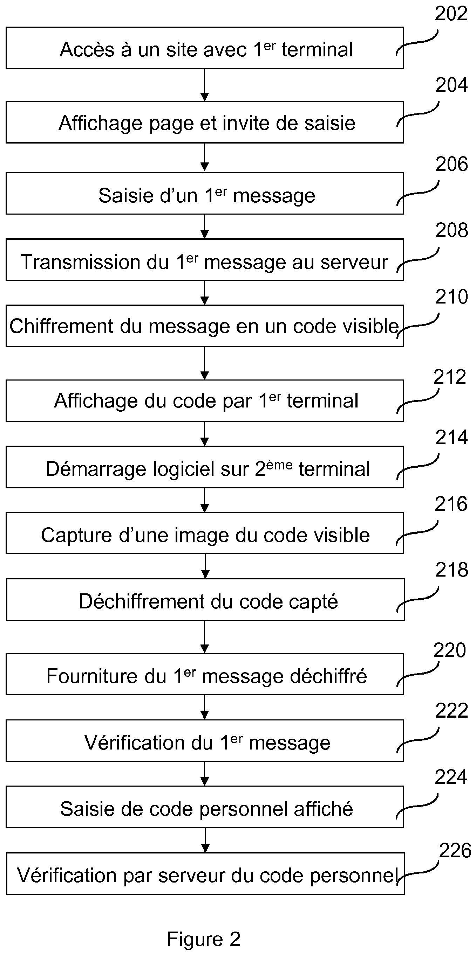

Dans la description de la figure 2, on admet que le premier message est un message alphanumérique saisi par l'utilisateur sur un clavier. La mise en œuvre des autres types de messages décrits ci-dessus, en remplacement ou en complément du message alphanumérique saisi au clavier, ne pose pas de difficulté à l'homme du métier. Dans la description de la figure 2, on admet que le code représentant le chiffrement du premier message est un code visible. La mise en œuvre des autres types de codes décrits ci-dessus, en remplacement ou en complément de ce code visible, ne pose pas de difficulté à l'homme du métier.

Comme illustré en figure 2, dans un premier mode de réalisation, le procédé se met en œuvre automatiquement à partir d'une étape 202 d'accès à un site de la toile, l'utilisateur utilisant pour cet accès un premier terminal utilisateur, par exemple un ordinateur.

Au cours d'une étape 204, le serveur hébergeant le site fournit une page du site et une invite de saisie d'un message. Le premier terminal utilisateur affiche cette page et cette invite sur son écran d'affichage. L'invite comporte, par exemple, l'affichage d'un message du type « merci de saisir maintenant un message différent des messages que vous avez déjà saisis ».

Au cours d'une étape 206, l'utilisateur saisit, avec le premier terminal utilisateur, un premier message. Eventuellement, le serveur du site interdit la saisie d'un même message au cours de deux accès successifs au site par l'utilisateur, pour éviter un apprentissage par un site de fraude.

Le message peut prendre différentes formes, par exemple :
- alphanumérique, par exemple par saisie au clavier dans un champ de saisie affiché sur un écran d'affichage du premier terminal utilisateur,
- sonore, notamment vocal, par capture du son par un microphone du premier terminal utilisateur,
- visuel, par capture d'une photo ou d'une succession d'images de l'utilisateur ou
- par capture, au moins partielle, d'écran, par exemple comportant un pointeur dont la position est commandée par l'utilisateur, par exemple par l'intermédiaire d'une souris informatique.

Ainsi, le message peut représenter l'acquiescement de l'utilisateur (geste, hochement de tête, parole d'accord, clic de validation ...). Ce qui, en cas de contestation ultérieure, peut être produit par l'exploitant du site de la toile, ou par l'utilisateur.

Au cours d'une étape 208, le premier terminal utilisateur transmet le premier message à un serveur du site, par exemple au serveur hébergeant le site ou à un serveur de sécurité relié au serveur hébergeant le site.

Au cours d'une étape 210, un serveur (le serveur hébergeant le site ou un serveur de sécurité associé) chiffre le premier message pour fournir un code visible.

Au cours d'une étape 212, le serveur hébergeant le site de la toile transmet le code visible au premier terminal utilisateur et le premier terminal utilisateur affiche ce code visible sur son écran d'affichage, préférentiellement dans une page du site.

Au cours d'une étape 214, l'utilisateur fait démarrer un logiciel de déchiffrement à un deuxième terminal utilisateur, par exemple un ordiphone.

Au cours d'une étape 216, l'utilisateur fait capter une image du code visible à un capteur d'image du deuxième terminal utilisateur.

Au cours d'une étape 218, le logiciel de déchiffrement déchiffre le code visible et fournit le premier message.

Au cours d'une étape 220, le deuxième terminal utilisateur fournit à l'utilisateur le premier message. L'utilisateur vérifie ce premier message au cours d'une étape 222. La fourniture du message dépend de son format. Si le message est saisi sur un clavier, la fourniture comporte l'affichage de ce message sur un écran d'affichage du deuxième terminal utilisateur. Si le message est visuel, par exemple une photo de l'utilisateur ou une séquence d'images de d'utilisateur ou un saisie, partielle ou non, du mouvement d'un pointeur sur une page du site, la fourniture du message consiste à afficher une ou plusieurs images sur l'écran d'affichage du deuxième terminal utilisateur. Si le message est sonore, notamment vocal, la fourniture du message comporte l'émission, par un haut-parleur, du message sonore.

Si le message affiché sur l'écran du deuxième terminal utilisateur est différent du premier message saisi par l'utilisateur au cours de l'étape 206, l'utilisateur sait qu'il n'est pas sur un site légitime.

On observe que le procédé décrit en regard de la figure 2 fonctionne selon la méthode du challenge-response (question-réponse), le challenge étant librement choisi par l'utilisateur et la réponse étant identique au challenge, mais après chiffrement et déchiffrement. La correspondance entre le chiffrement et le déchiffrement assurant l'authentification du site par l'utilisateur.

En variante, au cours des étapes 210 à 220, le code visible est aussi représentatif d'un deuxième message, par exemple un code personnel d'identification (« PIN »). Ce code personnel, généré par le serveur du site, est donc affiché par le deuxième terminal utilisateur au cours de l'étape 220. Dans ce cas, au cours d'une étape 224, l'utilisateur saisit le code personnel, avec le clavier du premier terminal utilisateur ou sur un clavier virtuel affiché sur l'écran du premier terminal utilisateur. Ce code personnel est transmis au serveur hébergeant le site de la toile et, le cas échéant, au serveur de sécurité.

Au cours d'une étape 226, le serveur ayant généré le code à afficher vérifie le code personnel. Si ce code personnel est correct, la navigation sur le site de la toile est autorisée.

En variante, le premier message saisi par l'utilisateur au cours de l'étape 206 est une question parmi un nombre de questions limité dont l'utilisateur a précédemment fournit la réponse au serveur hébergeant le site de la toile, par exemple lors de la souscription aux services de ce site. Dans ce cas, au cours de l'étape 210, le serveur retrouve la réponse à la question posée, dans sa mémoire de réponses, et chiffre cette réponse pour fournir le code à afficher au premier terminal utilisateur.

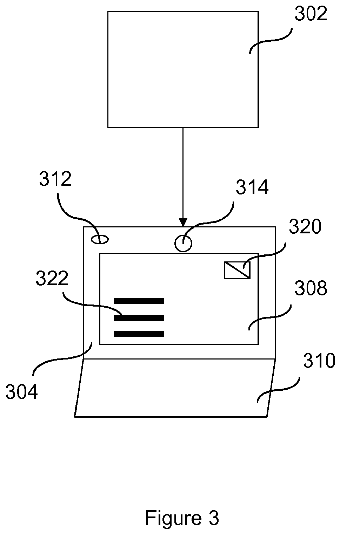

On observe, en figure 3, un serveur de site de la toile 302. Le serveur 302 héberge au moins une page 308 du site et génère un code 320 obtenu par chiffrement d'un message, lors de chaque accès d'un utilisateur à cette page 308. L'utilisateur utilise un seul terminal, avec des logiciels différents pour l'accès au site et pour l'authentification. Le terminal utilisateur 304, par exemple un ordinateur personnel, une tablette, un ordiphone (en anglais « smartphone ») ou un objet connecté, comporte une interface utilisateur, par exemple un écran d'affichage ou un haut-parleur. Le terminal utilisateur sert à accéder au site de la toile et à authentifier le site.

Le logiciel de déchiffrement peut utiliser un capteur de code, par exemple un capteur d'image ou un transducteur acousto-électrique, tel un microphone. Le comporte aussi une interface utilisateur, par exemple un écran d'affichage ou un haut-parleur. Le logiciel de déchiffrement déchiffre le code 320 capté et transmet le message déchiffré 322 à l'utilisateur sur l'interface utilisateur du terminal utilisateur.

En vérifiant le contenu du message, l'utilisateur peut s'assurer que la page de site à laquelle il accède est la page du site légitime et non une page d'un site miroir sur lequel il risque d'être victime d'une fraude.

La clé de chiffrement utilisée peut être symétrique ou, préférentiellement, asymétrique. Pour augmenter la fiabilité de l'authentification du site, le message est préférentiellement différent à chaque accès au site de la toile. Pour augmenter la fiabilité de l'authentification du site, le message est préférentiellement personnalisé, c'est-à-dire différent pour chaque visiteur du site de la toile et reconnaissable par cet utilisateur comme lui étant propre (spécifique).

Préférentiellement, le message chiffré est donc généré à partir de données fournies par l'utilisateur lui-même. Préférentiellement, ces données sont fournies au cours de la session d'accès au site par le terminal utilisateur 304.

Par exemple, l'utilisateur est invité, pour constituer le message :
- à saisir un message alphanumérique sur le clavier 310 du terminal utilisateur, éventuellement sur un clavier virtuel, éventuellement éphémère et affiché par le site,
- à déplacer un pointeur (son doigt sur un écran tactile ou le pointeur d'une souris) sur la page affichée 308, selon un mouvement de son choix,
- à prononcer une phrase devant le microphone 312 du terminal utilisateur 304,
- à faire capter au moins une image de lui par un capteur d'image 314 du terminal utilisateur 304 et/ou
- à faire capter une succession d'images de lui par le capteur d'image 314 du terminal utilisateur, par exemple pour effectuer un geste représentant son accord (ou acquiescement) pour un accès ou une transaction.

Ce message, une fois chiffré par un serveur de sécurité associé au site, est retourné sous la forme du code 320 au terminal utilisateur 304 et restitué, après déchiffrement, par le logiciel de déchiffrement.

Préférentiellement, s'il est visuel, le code 320 affiché sur l'écran du terminal utilisateur 304 prend la forme d'un logo du site. Ce logo comporte des variations, par exemple stéganographiques (watermark sur sa surface) ou de contour, représentatives du message chiffré.

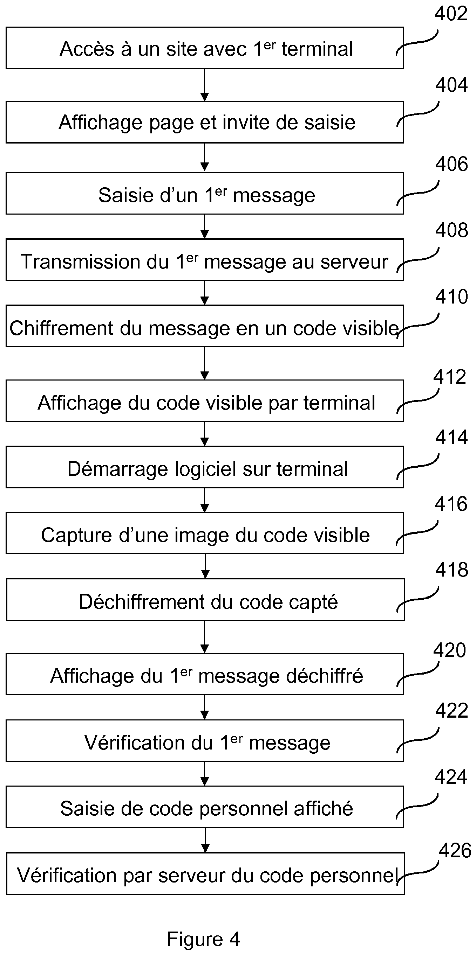

Dans la description de la figure 4, on admet que le premier message est un message alphanumérique saisi par l'utilisateur sur un clavier. La mise en œuvre des autres types de messages décrits ci-dessus, en remplacement ou en complément du message alphanumérique saisi au clavier, ne pose pas de difficulté à l'homme du métier. Dans la description de la figure 4, on admet que le code représentant le chiffrement du premier message est un code visible. La mise en œuvre des autres types de codes décrits ci-dessus, en remplacement ou en complément de ce code visible, ne pose pas de difficulté à l'homme du métier.

Comme illustré en figure 4, dans un mode de réalisation, le procédé se met en œuvre automatiquement à partir d'une étape 402 d'accès à un site de la toile, l'utilisateur utilisant pour cet accès un terminal utilisateur, par exemple un ordinateur.

Au cours d'une étape 404, le serveur hébergeant le site fournit une page du site et une invite de saisie d'un message. Le terminal utilisateur affiche cette page et cette invite sur son écran d'affichage. L'invite comporte, par exemple, l'affichage d'un message du type « merci de saisir maintenant un message différent des messages que vous avez déjà saisis ».

Au cours d'une étape 406, l'utilisateur saisit, avec le terminal utilisateur, un premier message. Eventuellement, le serveur du site interdit la saisie d'un même message au cours de deux accès successifs au site par l'utilisateur, pour éviter un apprentissage par un site de fraude.

Le message peut prendre différentes formes, par exemple :
- alphanumérique, par exemple par saisie au clavier dans un champ de saisie affiché sur un écran d'affichage du terminal utilisateur,
- sonore, notamment vocal, par capture du son par un microphone du terminal utilisateur,
- visuel, par capture d'une photo ou d'une succession d'images de l'utilisateur ou
- par capture, au moins partielle, d'écran, par exemple comportant un pointeur dont la position est commandée par l'utilisateur, par exemple par l'intermédiaire d'une souris informatique.

Ainsi, le message peut représenter l'acquiescement de l'utilisateur (geste, hochement de tête, parole d'accord, clic de validation ...). Ce qui, en cas de contestation ultérieure, peut être produit par l'exploitant du site de la toile, ou par l'utilisateur.

Au cours d'une étape 408, le terminal utilisateur transmet le premier message à un serveur du site, par exemple au serveur hébergeant le site ou à un serveur de sécurité relié au serveur hébergeant le site.

Au cours d'une étape 410, un serveur (le serveur hébergeant le site ou un serveur de sécurité associé) chiffre le premier message pour fournir un code visible.

Au cours d'une étape 412, le serveur hébergeant le site de la toile transmet le code visible au terminal utilisateur et le terminal utilisateur affiche ce code visible sur son écran d'affichage, préférentiellement dans une page du site.

Au cours d'une étape 414, l'utilisateur fait démarrer un logiciel de déchiffrement au terminal utilisateur.

Au cours d'une étape 416, l'utilisateur fait capter une image du code visible à un capteur d'image du terminal utilisateur.

Au cours d'une étape 418, le logiciel de déchiffrement déchiffre le code visible et fournit le premier message.

Au cours d'une étape 420, le terminal utilisateur fournit à l'utilisateur le premier message. L'utilisateur vérifie ce premier message au cours d'une étape 422. La fourniture du message dépend de son format. Si le message est saisi sur un clavier, la fourniture comporte l'affichage de ce message sur un écran d'affichage du terminal utilisateur. Si le message est visuel, par exemple une photo de l'utilisateur ou une séquence d'images de d'utilisateur ou un saisie, partielle ou non, du mouvement d'un pointeur sur une page du site, la fourniture du message consiste à afficher une ou plusieurs images sur l'écran d'affichage du terminal utilisateur. Si le message est sonore, notamment vocal, la fourniture du message comporte l'émission, par un haut-parleur, du message sonore.

Si le message affiché sur l'écran du terminal utilisateur est différent du premier message saisi par l'utilisateur au cours de l'étape 206, l'utilisateur sait qu'il n'est pas sur un site légitime.

On observe que le procédé décrit en regard de la figure 4 fonctionne selon la méthode du challenge-response (question-réponse), le challenge étant librement choisi par l'utilisateur et la réponse étant identique au challenge, mais après chiffrement et déchiffrement. La correspondance entre le chiffrement et le déchiffrement assurant l'authentification du site par l'utilisateur.

En variante, au cours des étapes 410 à 420, le code visible est aussi représentatif d'un deuxième message, par exemple un code personnel d'identification (« PIN »). Ce code personnel, généré par le serveur du site, est donc affiché par le terminal utilisateur au cours de l'étape 420. Dans ce cas, au cours d'une étape 424, l'utilisateur saisit le code personnel, avec le clavier du terminal utilisateur ou sur un clavier virtuel affiché sur l'écran du terminal utilisateur. Ce code personnel est transmis au serveur hébergeant le site de la toile et, le cas échéant, au serveur de sécurité.

Au cours d'une étape 426, le serveur ayant généré le code à afficher vérifie le code personnel. Si ce code personnel est correct, la navigation sur le site de la toile est autorisée.

En variante, le premier message saisi par l'utilisateur au cours de l'étape 406 est une question parmi un nombre de questions limité dont l'utilisateur a précédemment fournit la réponse au serveur hébergeant le site de la toile, par exemple lors de la souscription aux services de ce site. Dans ce cas, au cours de l'étape 410, le serveur retrouve la réponse à la question posée, dans sa mémoire de réponses, et chiffre cette réponse pour fournir le code à afficher sur l'écran du terminal utilisateur.

## Revendications

1. Procédé de sécurisation d'accès à un site de la toile, qui comporte une étape (202, 402) d'accès audit site par un premier terminal utilisateur (104, 304), **caractérisé en ce qu'**il comporte, ensuite et successivement :
- une étape (206, 406) de saisie d'un message personnel, imprévisible et variable entre deux accès successifs au site de la toile avec le terminal utilisateur sur une page du site,
- une étape (208, 408) de transmission du message à un serveur du site de la toile,
- une étape (210, 410) de chiffrement du message par le serveur du site de la toile pour former un code visible (120, 320),
- une étape (212, 412) d'affichage du code visible sur un écran d'affichage du premier terminal utilisateur,
- une étape (216, 416) de prise d'image du code visible avec un deuxième terminal utilisateur (106, 304), éventuellement identique au premier terminal utilisateur,
- une étape (218, 418) de déchiffrement du code avec le deuxième terminal utilisateur et
- une étape (220, 420) de fourniture du message déchiffré par le deuxième terminal utilisateur.

2. Procédé selon la revendication 1, dans lequel le message représente un geste de l'utilisateur.

3. Procédé selon l'une des revendications 1 ou 2, dans lequel le message comporte une succession d'images de l'utilisateur.

4. Procédé selon l'une des revendications 1 à 3, dans lequel le message comporte une partie alphanumérique saisie par l'utilisateur.

5. Procédé selon l'une des revendications 1 à 4, dans lequel le message comporte au moins une donnée biométrique de l'utilisateur.

6. Procédé selon l'une des revendications 1 à 5, dans lequel le message comporte une photographie de l'utilisateur.

7. Procédé selon l'une des revendications 1 à 6, dans lequel le message comporte une phrase prononcée par l'utilisateur.

8. Procédé selon l'une des revendications 1 à 7, dans lequel le message est représentatif d'un mouvement de pointeur effectué par l'utilisateur.

9. Procédé selon l'une des revendications 1 à 8, dans lequel le code (120, 320) prend la forme d'un logo du site.

10. Procédé selon l'une des revendications 1 à 9, qui comporte, de plus, une étape de génération, par le serveur, d'un code personnel, une étape de transmission du code personnel dans le code visible et une étape de saisie, par l'utilisateur, avec le premier terminal utilisateur, sur une page du site, du code personnel affiché par le deuxième terminal utilisateur.

11. Procédé selon l'une des revendications 1 à 10, dans lequel le deuxième terminal (106) est différent du premier terminal (104).

12. Procédé selon la revendication 11, qui comporte une étape (224, 424) de saisie d'un code personnel affiché par le deuxième terminal utilisateur.

13. Procédé selon l'une des revendications 1 à 10, dans lequel le deuxième terminal (304) est identique au premier terminal (304), la prise d'image étant contrôlée par un logiciel de déchiffrement mis en œuvre par le premier terminal.

## Patentansprüche

1. Verfahren zur Sicherung des Zugangs zu einer Webseite, das einen Schritt (202, 402) für den Zugang zur genannten Seite durch ein erstes Benutzerterminal (104, 304) umfasst und **dadurch gekennzeichnet** wird, dass es anschließend und nacheinander Folgendes umfasst:
- einen Schritt (206, 406) zur Eingabe einer persönlichen, unvorhersehbaren und veränderlichen Nachricht zwischen zwei aufeinanderfolgenden Zugriffen auf die Internetseite mit dem Benutzerterminal auf einer Seite der Internetseite,
- einen Schritt (208, 408) zur Übermittlung der Nachricht an einen Server der Webseite,
- einen Schritt (210, 410) zur Verschlüsselung der Nachricht durch den Webserver, um einen sichtbaren Code (120, 320) zu erzeugen,
- einen Schritt (212, 412) zur Anzeige des sichtbaren Codes in einem Anzeigefeld des ersten Benutzerterminals,
- einen Schritt (216, 416) zum Abbilden des sichtbaren Codes auf einem zweiten Benutzerterminal (106, 304), das gegebenenfalls mit dem ersten Benutzerterminal identisch ist,
- einen Schritt (218, 418) zur Entschlüsselung des Codes mit dem zweiten Benutzerterminal und
- einen Schritt (220, 420) zur Bereitstellung der durch das zweite Benutzerterminal entschlüsselten Nachricht.

2. Verfahren gemäß Anspruch 1, wobei die Nachricht eine Geste des Benutzers darstellt.

3. Verfahren gemäß Anspruch 1 oder 2, wobei die Nachricht eine Abfolge von Bildern des Benutzers umfasst.

4. Verfahren gemäß Anspruch 1 bis 3, wobei die Nachricht einen vom Benutzer eingegebenen alphanummerischen Teil umfasst.

5. Verfahren gemäß Anspruch 1 bis 4, wobei die Nachricht mindestens eine biometrische Information des Benutzers umfasst.

6. Verfahren gemäß Anspruch 1 bis 5, wobei die Nachricht ein Foto des Benutzers umfasst.

7. Verfahren gemäß Anspruch 1 bis 6, wobei die Nachricht einen vom Benutzer eingesprochenen Satz umfasst.

8. Verfahren gemäß Anspruch 1 bis 7, wobei die Nachricht eine vom Benutzer durchgeführte Cursor-Bewegung umfasst.

9. Verfahren gemäß Anspruch 1 bis 8, wobei der Code (120, 320) die Form eines Logos der Webseite annimmt.

10. Verfahren gemäß Anspruch 1 bis 9, das zudem einen Schritt zum Erzeugen eines persönlichen Codes durch den Server, einen Schritt zur Übertragung des persönlichen Codes in den sichtbaren Code und einen Schritt zum Eingeben des vom zweiten Benutzerterminal angezeigten persönlichen Codes durch den Benutzer auf dem ersten Benutzerterminal auf einer Seite der Webseite umfasst.

11. Verfahren gemäß Anspruch 1 bis 10, wobei sich das zweite Terminal (106) vom ersten Terminal (104) unterscheidet.

12. Verfahren gemäß Anspruch 11, das einen Schritt (224, 424) zum Eingeben eines vom zweiten Benutzerterminals angezeigten persönlichen Codes umfasst.

13. Verfahren gemäß Anspruch 1 bis 10, wobei das zweite Terminal (304) identisch mit dem ersten Terminal (304) ist und die Bildaufnahme durch eine von dem ersten Terminal verwendete Entschlüsselungssoftware gesteuert wird.

## Claims

1. Method for securing access to a website, comprising a step (202, 402) of a first user terminal (104, 304) accessing said website, **characterized in that** it comprises, next and in series:
- a step (206, 406) of entering on a page of the website a personal message, which is both variable and unpredictable between two successive accesses to the website, using the user terminal;
- a step (208, 408) of transmitting the message to a server of the website;
- a step (210, 410) of the server of the website encrypting the message in order to form a visible code (120, 320);
- a step (212, 412) of displaying the visible code on a display screen of the first user terminal;
- a step (216, 416) of taking an image of the visible code using a second user terminal (106, 304), which may be one and the same as the first user terminal;
- a step (218, 418) of decrypting the code using the second user terminal; and
- a step (220, 420) of providing the message decrypted by the second user terminal to the user.

2. Method according to claim 1, wherein the message represents a gesture by the user.

3. Method according to one of claims 1 or 2, wherein the message comprises a series of images of the user.

4. Method according to one of claims 1 to 3, wherein the message comprises an alphanumeric portion entered by the user.

5. Method according to one of claims 1 to 4, wherein the message comprises at least one item of biometric data of the user.

6. Method according to one of claims 1 to 5, wherein the message comprises a photograph of the user.

7. Method according to one of claims 1 to 6, wherein the message comprises a phrase spoken by the user.

8. Method according to one of claims 1 to 7, wherein the message is representative of a cursor movement made by the user.

9. Method according to one of claims 1 to 8, wherein the code (120, 320) takes the form of a logo of the website.

10. Method according to one of claims 1 to 9, which also comprises a step of the server generating a personal code, a step of transmitting the personal code within the visible code, and a step of the user entering the personal code displayed by the second user terminal into a page of the site with the first user terminal.

11. Method according to one of claims 1 to 10, wherein the second terminal (106) is distinct from the first terminal (104).

12. Method according to claim 11, which comprises a step (224, 424) of entering a personal code displayed by the second user terminal.

13. Method according to one of claims 1 to 10, wherein the second terminal (304) and the first terminal (304) are one and the same, the image capture being commanded by a decryption system utilized by the first terminal.
